# EUROPEAN PATENT APPLICATION

(11) **EP 2 933 480 A1**
(43) Date of publication of application: **21.10.2015**
(21) Application number: 14164772.7
(22) Date of filing: 15.04.2014
(51) Int. Cl.: F03D 11/00, G01N 29/04

(54) **Monitoring lamination of a component of a wind turbine**

(71) Applicant: Siemens Aktiengesellschaft, 80333 München (DE)
(72) Inventor: Nielsen, Per, 9310 Vodskov (DK)

(57) **Abstract**

The invention relates to an arrangement comprising a component (20) of a wind turbine (40) and a monitoring device (30). The component (20) comprises a composite material with a first layer (21) and at least a second layer (22). The first layer (21) and the second layer (22) are joined together by lamination. The monitoring device (30) comprises a transmitter (31) for generating a mechanical compression pulse (33) and a receiver (32) for receiving a time-resolved spectrum (35) based on the reflection of the mechanical compression pulse (34) within the composite material. Furthermore, the monitoring device (30) is durably attached to the component (20) such that the lamination between the first layer (21) and the second layer (22) is continuously monitored. The invention is also related to a method for continuously monitoring lamination between a first layer (21) of a composite material of a component (20) of a wind turbine (10) and a second layer (22) of the composite material. Finally, the invention is related to a condition monitoring system for monitoring a wind park, wherein the monitoring is carried out by such a method.

## Description

The present invention relates to a method for continuously monitoring lamination between a first layer of a composite material of a component of a wind turbine and a second layer of the composite material. Furthermore, the invention relates to a condition monitoring system for monitoring a wind park comprising at least one wind turbine, whereby the monitoring is carried out by the above mentioned method. Finally, the invention relates to an arrangement comprising a component of a wind turbine and a monitoring device.

A wind turbine for generating electricity typically comprises a plurality of components, such as a tower, a nacelle, a generator, a hub and one or more rotor blades. Typically, one or more of these components are made of a composite material. The rotor blade may, for instance, be manufactured as a composite material, comprising glass fiber mats which are tightly joined together with precast segments, such as a spar or a flange.

The single layers of a composite material are often laminated in order to ensure a tight and strong joint or connection.

After manufacture of the laminated composite material, it can however not be excluded that these layers delaminate at a given moment, leading to a potential break apart of the layers of the composite material. In the case of a rotor blade under operation in a wind turbine, delamination of the composite material may result in a severe incident, which may even cause damage to the surrounding area of the wind turbine.

It is well known to perform non-destructive testing, such as ultrasonic scans of, for instance, the root section of the rotor blades after casting the rotor blade in order to discover wrinkles or other insufficiencies during manufacture of the composite material, i.e. the rotor blade.

However, once the rotor blade is attached to the hub of the wind turbine and is operated it is difficult and expensive to perform these non-destructive test methods.

Thus, there exists an urgent need to find ways to detect delamination of a laminated composite material of a component of a wind turbine, even while the wind turbine is operated. It is desirable to detect delamination as early as possible in order to have the chance to take appropriate counter measures against it.

This objective is achieved by the independent claims. The dependent claims describe advantageous developments and modifications of the invention.

In accordance with the invention there is provided an arrangement comprising a component of a wind turbine and a monitoring device. The component comprises a composite material with a first layer and at least a second layer. The first layer and the second layer are joined together by lamination. The monitoring device comprises a transmitter for generating a mechanical compression pulse and a receiver for receiving a time-resolved spectrum based on the reflection of the mechanical compression pulse within the composite material. Furthermore, the monitoring device is durably attached to the component such that the lamination between the first layer and the second layer is continuously monitored.

A wind turbine is meant to be a device that can convert wind energy, i.e. kinetic energy from wind, into mechanical energy, which is subsequently used to generate electricity. A wind turbine is also referred to as a wind power plant.

The component which is part of the arrangement can in principle be any component of the wind turbine which comprises a composite material. As an example, a component of a wind turbine may be a tower, a nacelle, a generator, a hub, or a rotor blade.

The composite material comprises at least two layers, namely the first layer and at least the second layer. Both layers are joined together, in other words connected together, by lamination. Lamination is a technique of manufacturing a material in multiple layers. An advantage of a laminated composite material is its improved strength, stability, sound insulation, appearance or other properties based on the use of differing materials. A laminate may for instance be assembled by heat, by pressure, by welding, or by adhesives.

If the composite material comprises more than two layers, then more than two layers may be joined together by lamination. For a safe, reliable and efficient operation of a wind turbine it is necessary to ensure that the laminated composite material does not delaminate uncontrollably. Thus, the invention proposes to durably attach the monitoring device to the component. An important aspect is that the monitoring device is not just temporarily held or brought in contact with the component in order to check if the lamination between the first layer and the second layer is still in good condition, but that the monitoring device is permanently attached to the component. By this measure the lamination, in particular the condition and the quality of the lamination is continuously controlled and monitored. In other words, a real time monitoring of the lamination of the composite material is realized.

Thus, the lamination can be monitored in an early stage and counter measures can be taken rapidly. As delamination in a laminated composite material typically significantly decrease the strength of the structure of the composite material severe damage, such as for instance a fall-off a rotor blade can thus be prevented. With regard to the monitoring device, a standard device comprising a transmitter for generating a mechanical compression pulse and a receiver for receiving a time-resolved spectrum can be used.

Note that, typically, the transmitter emits an electromagnetic signal which is subsequently converted into a mechanical compression pulse. Likewise, the reflected mechanical compression pulse is converted back into an electromagnetic signal in the receiver, e.g. by means of piezo electric crystals).

In one alternative, the transmitter and the receiver are integrated in one common unit.

An advantage of having one common unit instead of several separate units is that only one element or device has to be attached to the component. This may be of importance if space is limited or if the monitoring device is large compared to the investigated portion of the component.

A common unit comprising the transmitter and the receiver is also referred to as a transducer. It is noted that the transmitter and the receiver may even be integrated in the same crystal.

In another alternative, the transmitter and the receiver are built as separate units.

An advantage of having two different units is that it may be easier to construct one unit for generating the mechanical compression pulse and a separate unit for receiving the reflected mechanical compression pulse. Thus, both signals do not detrimentally affect each other, for instance by interference. A technique with two different units for the transmitter and the receiver is also referred to as the pitch and catch technique.

In an advantageous embodiment, the component of the wind turbine is a rotor blade of the wind turbine.

The rotor blade is particularly exposed to harsh conditions. Considerable wind speeds involving high loads during long lifetimes exceeding 20 or 25 years are typical for a rotor blade of a wind turbine. Additionally, as the diameter of the rotor of a wind turbine becomes larger and larger, the length of a typical rotor blade also becomes larger and larger, which leads to considerable forces particularly at the root section of the rotor blade. It is thus crucial that the lamination at the root section of the rotor blade stays in good condition. Any delamination shall be identified as early as possible. Thus, attaching the monitoring device at the surface of the rotor blade, in particular at the root section of the rotor blade, represents a considerable advantage and increases the safety of the wind turbine considerably.

Furthermore, typically there is plenty of space in the interior of a rotor blade at its root section.

In another advantageous embodiment, the first layer comprises glass fibers.

Glass fibers are a well-known and easily available material which is well-suited to build a composite material of a component of the wind turbine. In particular with regard to the rotor blades, where a compromise between structural stability and light weight has to be made, glass fibers are a well-suited option for manufacturing a rotor blade.

In another preferred embodiment, the second layer comprises a precast segment of the root section of the rotor blade. The precast segment may be made of a composite comprising glass fibers and epoxy resin. It is advantageous to have such a rigid and stable material in the root section of the rotor blade in order to stably connect the rotor blade with the hub via for instance a pitch bearing.

In another preferred embodiment, the monitoring device is at least partly attached to the component by means of an adhesive, in particular comprising epoxy, and/or by fastening means.

Using an adhesive such as glue has the advantage that no holes or other recesses have to be screwed into the composite material. If the attachment of the monitoring device to the component is realized by screws or bolts an advantageous way to do so is to include an immersion or well into the composite material from the beginning on and thus not damage the material in a later stage by drilling holes or pits into it. Another example for an advantageous attachment is the use of a holding bracket between the monitoring device and the component.

In another preferred embodiment, the monitoring device is attached to the component at least from the beginning of operation of the wind turbine until the end of lifetime of the component.

In other words, the component is monitored during the whole operational lifetime of the component. Thus, a much more thorough and extensive monitoring of the component is possible compared to a sporadic testing of the component manually. The lifetime of the component may be 20 years or 25 years or even exceeding this time span.

In a first alternative, the monitoring device is already attached to the component during manufacturing of the component. As an example, the transmitter and the receiver may be attached to a rotor blade while the rotor blade is still at the manufacturing site.

In another alternative, the monitoring device is attached to the component after the component has been transported from the manufacturing site to the installation site of the wind turbine. This has the advantage that the monitoring device, if for instance being attached at the exterior of the component, is not disturbing during transportation.

In a third alternative, the monitoring device is attached to the component after installation of the wind turbine and just before taking the wind turbine into operation.

In another preferred embodiment, the mechanical compression pulse is a pulsed mechanical compression pulse. The pulse length, precisely the length between two pulses, is chosen advantageously such that the reflected mechanical compression pulse is well received by the receiver before the transmitter emits the next mechanical compression pulse.

In another advantageous embodiment, the mechanical compression pulse comprises a frequency in the range between 10 kHz and 1 GHz, in particular between 20 kHz and 1 MHz.

In other words, using an ultrasound mechanical compression pulse is advantageous. The ultrasound range of wavelength has the advantage that it is not audible for human beings. Furthermore, ultrasound technology is well-proven and is a standard product in the market.

Yet another advantageous arrangement is if the direction of the wave vector of the mechanical compression pulse and the direction of the wave vector of the reflected mechanical compression pulse are substantially antiparallel.

It is noted that the term "substantially" refers to and comprises variations of up to 10 per cent compared to an ideal antiparallel wave vector. Two wave vectors are antiparallel if they are parallel but point in opposite directions. If both mentioned wave vectors are antiparallel it is advantageous to have a common unit for the transmitter and the receiver and have a pulsed mechanical compression pulse. This technique is also referred to as the pulsed echo technique, which is commonly known in the ultrasound technology field. The invention is also related to a method for continuously monitoring lamination between a first layer of a composite material of a component of a wind turbine and a second layer of the composite material. The monitoring is carried out by means of a monitoring device which is durably attached to the component, and wherein the method comprises the steps of:
- applying a mechanical compression pulse to the composite material,
- receiving a time-resolved spectrum based on the reflection of the mechanical compression pulse within the composite material, and
- comparing the obtained spectrum with a reference spectrum of the composite material.

One advantage of such a method for continuously monitoring the lamination is that a potential failure of the lamination, in other words a delamination, is identified almost instantaneously and thus counter measures can be taken rapidly. Another advantage is that as delamination is identified in an early stage the damage at the component may yet be small, thus a repair of the damage is not so costly. Yet another advantage is that due to the early identification of delamination the wind turbine can be operated e.g. at lower rotational speed until service personal arrives and takes care of the fault.

In another embodiment, the method comprises the further step of recording the time-resolved spectrum.

In this embodiment, the time-resolved spectrum which is based on the reflected mechanical compression pulse is not only received and compared to a reference spectrum but also recorded. This can be done by means of appropriate recording means. Examples are storage means, for instance computer related storage means. An advantage of recording the time-resolved spectrum is that it is documented and can be taken for further analyses at a later moment.

In a preferred embodiment, the time-resolved spectrum is recorded continuously.

An advantage of a permanent and continuous record is that an optimum base of in depth analysis of the spectrum is possible.

In another embodiment, however, the time-resolved spectrum is recorded at a predetermined sampling rate.

An advantage of recording at a certain sampling rate is that less storage place is necessary. Additionally for a rough analysis which however is sufficient in most cases it is sufficient to have the spectrum recorded at certain moments, i.e. at a certain sampling rate. Preferred examples of this predetermined sampling rate are sampling rates in a range between 0.5 seconds and 10 minutes, in particular between 1 second and 1 minute.

It is well-known from other measurements at wind turbines that sampling rates between 1 second and 1 minute is a good compromise between having a sufficiently detailed data material and not needing or using too much storage place.

Finally, the invention is also directed towards a condition monitoring system for monitoring a wind park with at least one wind turbine. The condition monitoring system continuously monitors lamination between a first layer of a composite material of a component of the wind turbine and a second layer of the composite material. The monitoring is carried out by the method described above.

Most wind parks nowadays are controlled by a condition monitoring system. Such a condition monitoring system can be a basic system controlling basic properties and output values of the monitored wind turbines. Such a condition monitoring system can also be very complex monitoring diverse aspects and elements of the wind turbines adhering to the monitored wind park. In any case, it is advantageous to implement the above described method for continuously monitoring lamination in such a condition monitoring system.

In particular, the result of the monitoring with regard to delamination in certain components of the wind turbine can be connected to predetermined actions via the control unit of the condition monitoring system. These actions may include a lowering of the rotational speed of the turbine or even a complete shutdown of the respective wind turbine.

Embodiments of the invention are now described, by way of example only, with reference to the accompanying drawings, of which
- Figure 1: shows a wind turbine;
- Figure 2: shows a monitoring device attached to a component of a wind turbine;
- Figure 3: shows another embodiment of a monitoring device attached to a component of a wind turbine;
- Figure 4: shows a monitoring device attached to a three-layer component of a wind turbine;
- Figure 5: shows the time-resolved spectrum of the reflected mechanical compression pulse measured at the arrangement of Figure 4;
- Figure 6: shows the arrangement of Figure 4 with a delamination between the first and the second layer; and
- Figure 7: shows the respective time-resolved spectrum referring to the arrangement of Figure 6.

The illustration in the drawings is in schematic form. It is noted that in different figures similar or identical elements may be provided with the same reference signs.

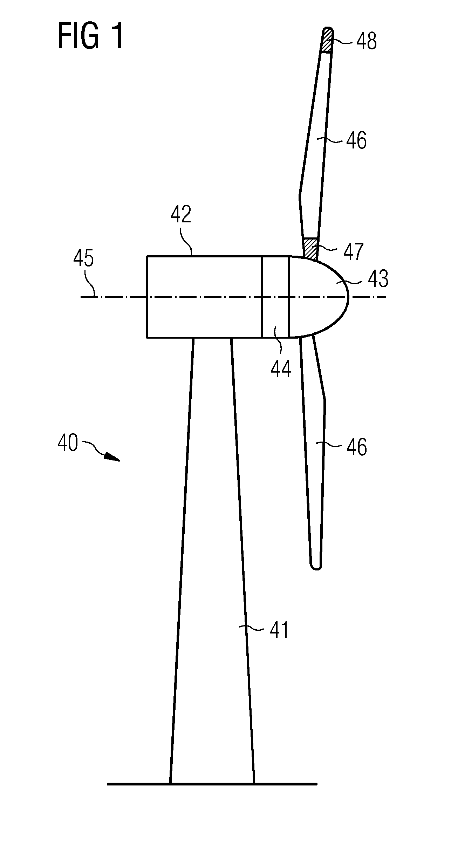

In Figure 1, a wind turbine 40 is shown. The wind turbine 40 comprises a nacelle 42 and a tower 41. The nacelle 42 is mounted at the top of the tower 41. The nacelle 42 is mounted rotatable with regard to the tower 41 by means of a yaw bearing. The axis of rotation of the nacelle 42 with regard to the tower 41 is referred to as the yaw axis.

The wind turbine 40 also comprises a hub 43 with one or more rotor blades 46. Preferably, the wind turbine 40 comprises three rotor blades 46. The hub 43 is mounted rotatable with regard to the nacelle 42 by means of a main bearing. The hub 43 is mounted rotatable about a rotor axis of rotation 45.

The wind turbine 40 furthermore comprises a main shaft, which connects the hub 43 with a rotor of a generator 44. If the hub 43 is connected directly to the rotor, the wind turbine is referred to as "gearless", direct drive wind turbine. Alternatively, the hub 43 may also be connected to the rotor via a gearbox. This type of wind turbine is commonly referred to as a "geared wind turbine".

The generator 44 is accommodated within the nacelle 42. It comprises the rotor and a stator. The generator 44 is arranged and prepared for converting the rotational energy from the rotor into electrical energy.

In the concrete example of Figure 1, the wind turbine 40 comprises three rotor blades 46 (of which two rotor blades 46 are depicted in Figure 1). The rotor blades 46 are mounted rotatable with regard to the hub 43 by means of a pitch bearing. The rotor blades 46 may thus be pitched in order to optimize the orientation with regard to the wind flow impinging on the wind turbine 40. Each of the rotor blades 46 comprises a root section 47 and a tip section 48. The root section 47 refers to the section of the rotor blade 46 which is closest to the hub 43. The tip section 48 refers to the section of the rotor blade 46 which is farthest away of the hub 43 in which is opposite to the root section 47.

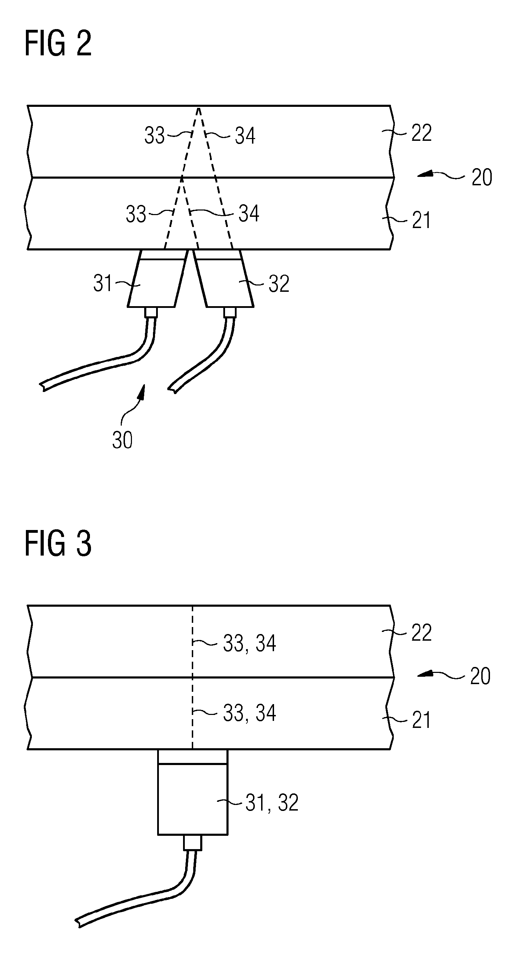

Figure 2 shows a component 20 of a wind turbine and a monitoring device 30, the latter being attached to the component 20. The component 20 comprises two layers, a first layer 21 and a second layer 22. The monitoring device 30 is attached to the first layer 21.

In the concrete embodiment shown in Figure 2, the monitoring device 30 is attached to the first layer 21 by means of a adhesive, which is strong enough and durable enough to ensure a reliable attachment during the whole lifetime of the component 20, which is at least 25 years. The first layer 21 and the second layer 22 are directly adjacent to each other. The monitoring device 30 comprises two separate units, a transmitter 31 and a receiver 32. The transmitter 21 emits an electromagnetic signal which is subsequently converted to a mechanical compression pulse 33 which is guided towards the component 20. The emitted mechanical compression pulse 33 propagates in the first layer 21 in a specific direction of propagation until it reaches the boundary between the first layer 21 and the second layer 22. At the boundary of the two layers 21, 22 a part of the emitted mechanical compression pulse 33 is reflected. The reflected mechanical compression pulse 34 travels back to the first layer 21 and is received by the receiver 32 which is adjacent to the transmitter 31. The fraction of the mechanical compression pulse which is reflected at the boundary between the first layer 21 and the second layer 22 depends on the difference of the material properties of both layers 21, 22. The more similar both layers 21, 22 are, the less pronounced the reflected mechanical compression pulse 34 is.

A certain fraction of the emitted mechanical compression pulse 33 propagates into the second layer 22 until it reaches the boundary layer of the second layer 22 and the material which is behind the second layer 22. In Figure 2 the reflected part of the mechanical compression pulse 34 is shown. The reflected mechanical compression pulse 34 which is reflected at the boundary between the second layer 22 and the ambient propagates or travels back to the second layer 22 and the first layer 21 and is also received by the receiver 32.

The concept shown in Figure 2 is a technique that is known as pitch and catch technique. The novel and advantageous feature of the arrangement shown in Figure 2 is that the monitoring device 30 is durably attached by the adhesive layer to the first layer 21 and that thus a permanent and continuous measurement of the reflected mechanical compression pulse is possible.

Figure 3 shows a similar arrangement as shown in Figure 2 with regard to the component 20. However, the monitoring device 30 is different as in Figure 3 both the transmitter 31 and the receiver 32 are integrated in one common unit. This has the advantage of saving place. In that case the emitted mechanical compression pulse 32 and the reflected mechanical compression pulse 34 are substantially antiparallel to each other. In other words, while the angle between the emitted mechanical compression pulse 33 and the reflected mechanical compression pulse 34 is less than 180 degrees in the case of the pitch and catch technique illustrated in Figure 2, this angle is substantially equal to 180 degrees in case of the pulsed echo technique shown in Figure 3.

This concept is referred to as the pulsed echo technique because advantageously the emitted mechanical compression pulse 33 is sent as a pulsed signal. This ensures that reception of the reflected mechanical compression pulse 34 can reliably carried out during the pauses or breaks between two pulses of the emitted mechanical compression pulse 33.

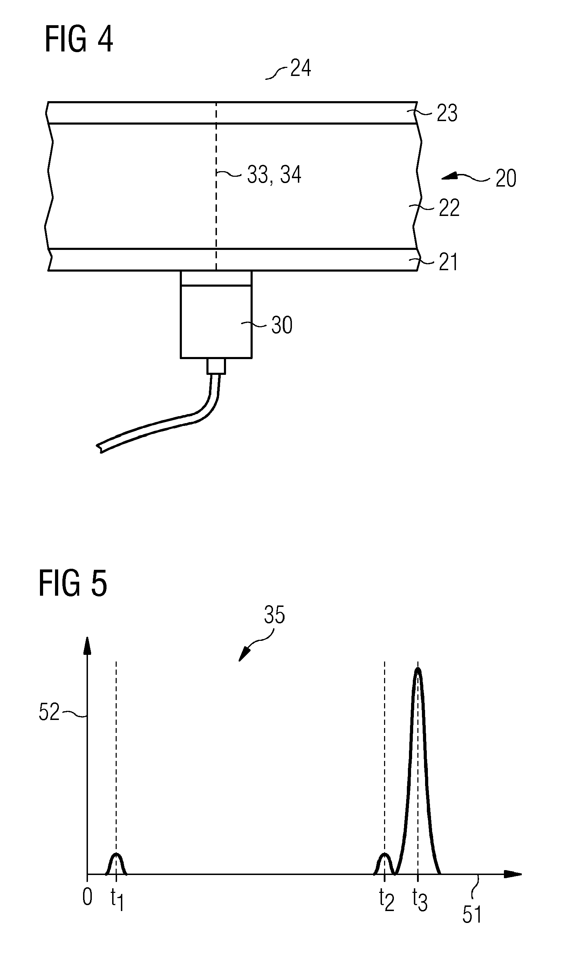

Figure 4 shows a component 20 comprising three layers, a first layer 21, a second layer 22 and a third layer 23. As a concrete example, Figure 4 shows a precast segment of a root section of a rotor blade, represented by the second layer 22. The second layer 22 is surrounded by layers comprising glass fibers which are represented by the first layer 21 and the third layer 23. The monitoring device 30 comprises both the transmitter 31 and the receiver 32. Thus, the pulsed echo technique is applied to the component 20. Note that the third layer 23 is delimited on one side by the precast segment of the root section 47 and on the other side of air 24, i.e. the ambient.

Figure 5 shows a time-resolved spectrum 35 that is obtained by a measurement carried out at the arrangement shown in Figure 4. The signal amplitude 52 of the reflected mechanical compression pulse 34 is depicted in dependency of the time 51. It can be seen that at the time t1 a small signal is recorded. Then, at time t2 also a small signal is recorded. Finally, at the time t3 a large signal amplitude is received by the receiver. This can be understood by the fact that the amount of the reflected mechanical compression pulse 34 compared to the emitted mechanical compression pulse 33 is small at the boundary between the first layer 21 and the second layer 22 as well as between the second layer 22 and the third layer 23. It is large, however, at the boundary between the third layer 23 and the air 24. By this technique, in particular by this time-resolved spectrum 35, also the thickness of the different layers can be measured. The thickness of the single layers is directly linked to the time at which the signal amplitude 52 of the respective signals is measured.

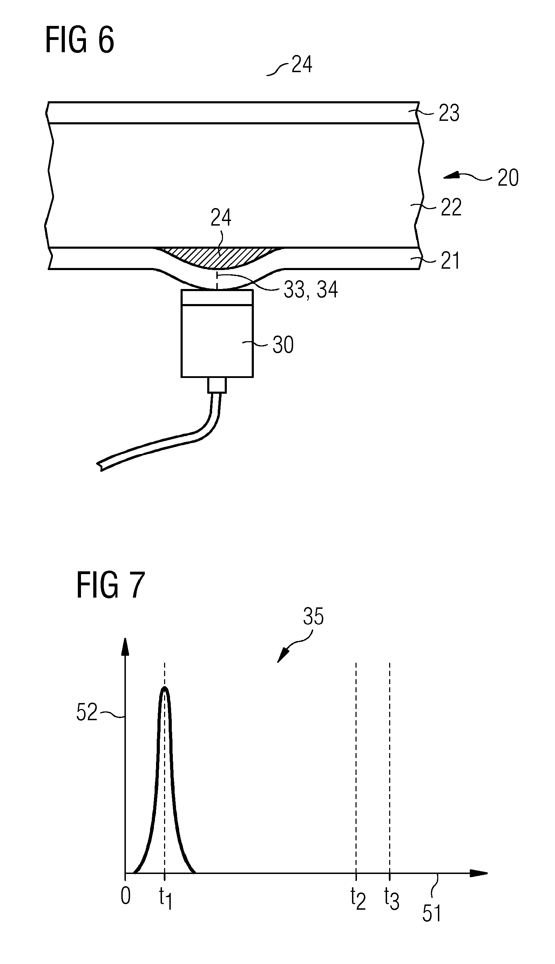

Figure 6 shows the same arrangement as Figure 4 with the only difference that now delamination between the first layer 21 and the second layer 22 has occurred in a certain region of the component 20. As the delamination has occurred in a region which is scanned by the monitoring device 30, this delamination is identified at an early stage by means of the time-resolved spectrum 35 which is shown in Figure 7. Note that delamination between the first layer 21 and the second layer 22 translates into a space filled with air 24 between the first layer 21 and the second layer 22. Alternatively, this empty space may also be filled with other gases or by a vacuum.

As the emitted mechanical compression pulse 33 propagates through the first layer 21 and reaches the boundary between the first layer 21 and the empty space being created by the delamination a large fraction of the emitted mechanical compression pulse 33 is now reflected. Thus, in the example shown in Figure 7, the whole emitted mechanical compression pulse 33 is reflected at the boundary between the first layer 21 and the air 24, leading to a high signal amplitude 52 after the time t1 and no signal amplitudes 51 at the later times t2 and t3.

By identifying and discerning such a time-resolved spectrum 35 as shown in Figure 7, service personal or an automated condition monitoring system realized that a problem, in particular delamination between layers of a composite material has taken place and may thus be able take counter measures against it.

Although the present invention has been described in detail with reference to preferred embodiments, it is to be understood that the present invention is not limited by the disclosed examples. In fact, numerous additional modifications and variations could be made thereto by a person skilled in the art without departing from the scope of the invention.

It should also be noted that the use of "a" or "an" throughout this application does not exclude a plurality, and "comprising" does not exclude other steps or elements. Also elements described in association with different embodiments may be combined. It should furthermore be noted that reference signs in the claims should be construed as limiting the scope of the claims.

## Claims

1. Arrangement comprising a component (20) of a wind turbine (40) and a monitoring device (30), wherein
- the component (20) comprises a composite material with a first layer (21) and at least a second layer (22),
- the first layer (21) and the second layer (22) are joined together by lamination,
- the monitoring device (30) comprises a transmitter (31) for generating a mechanical compression pulse (33) and a receiver (32) for receiving a time-resolved spectrum (35) based on the reflection of the mechanical compression pulse (34) within the composite material,
**characterized in that**
the monitoring device (30) is durably attached to the component (20) such that the lamination between the first layer (21) and the second layer (22) is continuously monitored.

2. Arrangement according to claim 1,
wherein the first layer (21) comprises glass fibers.

3. Arrangement according to one of the claims 1 or 2, wherein the monitoring device (30) is at least partly attached to the component (20) by means of an adhesive, in particular comprising epoxy, and/or by fastening means.

4. Arrangement according to one of the claims 1 to 3, wherein the monitoring device (30) is attached to the component (20) at least from the beginning of operation of the wind turbine (40) until the end of lifetime of the component (20).

5. Arrangement according to one of the claims 1 to 4, wherein the mechanical compression pulse (33, 34) comprises a frequency in the range between 10 kHz (kilo Hertz) and 1 GHz (Giga Hertz), in particular between 20 kHz and 1000 kHz.

6. Arrangement according to one of the claims 1 to 5,
wherein the direction of the wave vector of the mechanical compression pulse (33) and the direction of the wave vector of the reflected mechanical compression pulse (34) are substantially antiparallel.

7. Arrangement according to one of the claims 1 to 6, wherein the component (20) is a rotor blade (46) of the wind turbine (40).

8. Arrangement according to claim 7,
wherein the monitoring device (30) is attached to the root section (47) of the rotor blade (46).

9. Arrangement according to one of the claims 7 or 8, wherein the second layer (22) comprises a precast segment of the root section (47) of the rotor blade (46).

10. Method for continuously monitoring lamination between a first layer (21) of a composite material of a component (20) of a wind turbine (40) and a second layer (22) of the composite material, wherein the monitoring is carried out by means of a monitoring device (30) which is durably attached to the component (20), and wherein the method comprises the steps of
- applying a mechanical compression pulse (33) to the composite material,
- receiving a time-resolved spectrum (35) based on the reflection of the mechanical compression pulse (34) within the composite material, and
- comparing the obtained spectrum with a reference spectrum of the composite material.

11. Method according to claim 10,
wherein the method comprises the further step of recording the time-resolved spectrum (35).

12. Method according to one of the claims 10 or 11,
wherein the time-resolved spectrum (35) is recorded continuously.

13. Method according to one of the claims 10 to 12,
wherein the time-resolved spectrum (35) is recorded at a predetermined sampling rate.

14. Method according to claim 13,
wherein the pre-determined sampling rate is in a range between 0.5 seconds and 10 minutes, in particular between 1 second and 1 minute.

15. Condition monitoring system for monitoring a wind park comprising at least one wind turbine (40),
wherein the condition monitoring system continuously monitors lamination between a first layer (21) of a composite material of a component (20) of the wind turbine (40) and a second layer (22) of the composite material, and the monitoring is carried out by the method according to one of the claims 10 to 14.
